# EUROPÄISCHE PATENTSCHRIFT

(11) **EP 1 887 248 B1**
(45) Veröffentlichungstag und Bekanntmachung des Hinweises auf die Patenterteilung: **22.07.2009**
(21) Anmeldenummer: 07015454.7
(22) Anmeldetag: 07.08.2007
(51) Int. Cl.: F16F 1/40, F16F 3/08

(54) **Schichtfeder mit lastabhängiger progressiver Steifigkeit**
Layer spring with load-related progressive rigidity
Ressort multicouche doté d'une rigidité progressive dépendante de la charge

(30) Priorität: 09.08.2006 EP 06016608
(43) Veröffentlichungstag der Anmeldung: 13.02.2008
(73) Patentinhaber: Mitsch, Franz, 64646 Heppenheim (DE)
(72) Erfinder: Mitsch, Franz, 64646 Heppenheim (DE)
(74) Vertreter: Benz, Jürgen

(56) Entgegenhaltungen:
- EP-A- 1 566 543
- EP-A- 1 630 446
- DE-A1- 1 475 023
- US-A- 3 083 065

## Beschreibung

Die Erfindung betrifft eine neuartige Schichtfeder, welche aufgrund ihres konstruktiven Aufbaus und des verwendeten teilweise elastomeren Materials in der Lage ist, mit zunehmender Belastung eine lineare bis progressive bis exponentiell ansteigende Steifigkeit anzunehmen und so bestens geeignet ist, Körperschallentkopplung und Schwingungsdämpfung lastspezifisch zu bewirken. Die erfindungsgemäßen Schichtfedern sind insbesondere für den Einsatz bei Windkraftanlagen aber auch im Maschinen- und Fahrzeugbau geeignet.

Schichtfedern aus zumeist metallischen Scheiben oder Platten, welche über Elastomerschichten miteinander verbunden sind und mittig eine zentrale Bohrung zur Aufnahme der zu dämpfenden Vorrichtung besitzen, sind im Stand der Technik hinreichend bekannt (siehe DE-A-1 475 023) und werden für die verschiedensten Zwecke eingesetzt.
Die bekannten Schichtfedern bestehen dabei in der Regel aus einer Elastomerschicht, die sich zwischen zwei Endplatten befindet und an diese vulkanisiert ist. Alternativ bestehen solche Schichtfedern aus mehreren Elastomerschichten, welche durch Zwischenplatten voneinander getrennt sind, wobei die äußeren Elastomerschichten ebenfalls mit Endplatten versehen sind. Die End-und Zwischenplatten besitzen dabei eine wesentliche höhere Steifigkeit als die Elastmorschichten. Zumeist sind die End- und Zwischenplatten nicht komprimierbar.

Derartige Schichtfedern des Standes der Technik weisen unter zunehmender Belastung über einen großen Bereich üblicherweise ein mehr oder weniger lineares Steifigkeitsprofil auf, welches wenig beeinflussbar ist.

Bei einer Vielzahl von Anwendungen im Maschinen- und Fahrzeugbau ist es aber wünschenswert, dass die Steifigkeit bzw. Dämpfung des Systems je nach Lasteinwirkung unterschiedlich stark zu beeinflussen und zu regulieren. Die dabei erforderlichen Steifigkeitsprofile sollten dabei nicht nur linear oder nicht ausschließlich linear sein.

Derartige nicht ausschließlich lineare Dämpfungs- bzw. Steifigkeitsprofile werden nunmehr mittels der erfindungsgemäßen Schichtfedern erzielt, wie sie in den Ansprüchen und in der folgenden Beschreibung näher dargelegt sind.

Gegenstand der Erfindung ist somit eine Schichtfeder , welche ein belastungsabhängiges Steifigkeitsprofil mit Phasen linear zunehmender Steifigkeit, progressiv ansteigender Steifigkeit und exponentiell wachsender Steifigkeit aufweist, bestehend im wesentlichen aus mindestens einer Elastomerschicht (3), welche zwischen einer oberen und unteren unelastischen Endplatte (1) angeordnet ist, wobei die Platten und die mindestens eine Elastomerschicht eine axiale Bohrung (6) zur Aufnahme des zu dämpfenden Bauteils aufweisen, und in der Bohrung ein Elastomerkörper (4) in Form einer Hülse oder einer oder mehrere ringförmigen Scheiben angeordnet ist, welcher bei Krafteinwirkung auf die Elastomerschicht (3) des Federelements in axiale Richtung (5) einen ringförmigen Wulst (7) im Bereich der Stirnfläche der Elastomerschicht (3) an der Innenwand der Bohrung (6) erzeugt, der durch Verkleinerung des Querschnitts der Bohrung mit zunehmender Belastung die Steitigkeit der Schichtfeder erhöht.

In einer Ausführungsform umfasst die erfindungsgemäße Schichtfeder zwei derartige parallel zueinander angeordnete Elastomerschichten (3), welche durch eine im wesentlichen unelastische bzw. nicht komprimierbare Zwischenplatte (2) voneinander getrennt sind, so dass bei Belastung der Feder in axialer Richtung (5) zwei ringförmige Wulste (7) aus dem Material der Elastomerhülse (4) oder der Elastomerschicht (3) entlang der beiden Elastomerschichten (3) entstehen.

In einer anderen Ausführungsform umfasst die erfindungsgemäße Schichtfeder drei derartige parallel zueinander angeordnete Elastomerschichten (3), welche jeweils durch eine unelastische bzw. nicht komprimierbare Zwischenplatte (2) voneinander getrennt sind, so dass bei Belastung der Feder in axialer Richtung (5) drei ringförmige Wulste (7) entlang der drei Elastomerschichten (3) entstehen. Die beiden äußeren Elasomerschichten sind nach außen vorzugsweise mit einer Endplatte (1) versehen.

In weiteren Ausführungsformen umfasst die erfindungsgemäße Schichtfeder vier, fünf, sechs, sieben, acht, neun oder zehn derartige parallel zueinander angeordnete Elastomerschichten (3), welche jeweils durch eine unelastische bzw. nicht komprimierbare Zwischenplatte (2) voneinander getrennt sind, so dass bei Belastung der Feder in axialer Richtung (5) vier, fünf, sechs, sieben, acht, neun oder zehn ringförmige Wulste (7) entlang der vier, fünf, sechs, sieben, acht, neun oder zehn Elastomerschichten (3) entstehen. Die beiden äußeren Elasomerschichten sind auch hier nach außen vorzugsweise mit einer Endplatte (1) versehen.
Natürlich kann bei Bedarf vorgesehen sein, dass die so ausgestattete Schichtfeder auch mehr als zehn Elastomerschichten und damit auch entsprechend mehr Zwischenplatten besitzt.

Ferner kann eine entsprechende Schichtfeder mindestens eine Zwischenplatte (2) parallel zu den Endplatten (1) aufweisen, und durch Elastomerschichten (3) mit den Endplatten (1) oder weiteren Zwischenplatten (2) verbunden sein, so dass bei Belastung der Feder in axialer Richtung (5) mindestens zwei ringförmige Wulste (7) entstehen, wobei vorzugsweise zwei benachbarte Wulste durch einen Zwischenraum (8) voneinander getrennt sind, der sich mit zunehmender Belastung der Feder schließt und bei größtmöglicher Kompression der Elastomerschichten (3) völlig geschlossen ist.

Der Elastomerkörper (4) ist vorzugsweise als Hülse ausgearbeitet, welche in ihrer Länge vorzugsweise weitestgehend der Länge der Bohrung bzw. Höhe der Schichtfeder entspricht. In dieser Ausführungsform stellt der Elastomerkörper (4) ein Bohrungsfutter dar, welches im wesentlichen die gesamte Innenfläche des Bohrungszylinders einnimmt und das zu dämpfendeBauteil umschließt.

Der Elastomerkörper (4) kann aber auch nur Teile der Bohrung abdecken. Insbesondere kann er aus einzelnen ringförmigen Scheiben bestehen, die lose oder miteinander auf unterschiedliche Weise verbunden sind und jeweils in der Höhe der Stirnfläche bzw. der Kanten der jeweiligen Elastomerschicht (3) angeordnet sind und mit dieser in Verbindung stehen oder mit ihr fest verbunden sind.

In einer besonderen Ausführungsform dieser Variante sind die scheibenförmigen Elastomerkörper (4) ein Teil der Elastomerschichten (3) selbst, stellen also überstehendes Material dar, das über den Rand der Bohrung hinausragt, bzw. in die Bohrungsöffnung hineinragt. In diesem Fall stellt der Elastomerkörper eine entsprechende Anzahl von Verlängerungen der Elstomerschichten dar, welche in den Bohrungszylinder hineinragen, wobei das so gebildete elastomere Futter in der Bohrungsöffnung den Bohrungszylinder (6) im unbelasteten Zustand der Schichtfeder nicht durchgehend ausfüllt. Bei Belastung bzw. im Lastbetrieb der erfindungsgemäßen Schichtfeder in axialer Richtung werden die überstehenden Bereiche an das zu dämpfende Bauteil gepresst und erfahren eine Verdickung oder Wulstbildung (7), die dazu führen kann, dass der gesamte Innenraum der Bohrung (6) letztlich mit Elastomermaterial ausgefüllt ist.

In einer weiteren Variante der erfindungsgemäßen Schichtfeder stehen die Elastomerschichten (3), wie beschrieben, über, ragen also in der Raum des Bohrungszylinders hinein, der Bohrungszylinder (6) ist aber zusätzlich mit einem vorzugsweise hülsenförmigen Elastomerkörper (4) ausgestattet, der nunmehr im unbelasteten Zustand an den Stirnflächen der überstehenden Bereiche bzw. Elsatomerschichten anliegt und erst bei Kompression der Feder an die Innenfläche der Bohrung gepresst wird.

Der Verlauf des Anstiegs der Steifigkeit (Progressionsverlauf) eines erfindungsgemäßen Federelementes kann generell durch Einlegen einer unterschiedlich dicken Hülse (4) variabel verändert werden. Ein zusätzlich eingelegter Körper (4) verschiebt prinzipiell die Progression auf einen früheren Wert, d. h. hierdurch wird im allgemeinen eine Verkürzung der linearen Phase und ein schnellerer Eintritt in die progressive und exponentielle Phase erzielt. Entsprechendes wird auch durch unterschiedlich dicke Hülsen oder Scheiben (4) und / oder durch unterschiedlich tiefes Einschieben besagter Hülsen oder Scheiben von oben und / oder von unten in den Bohrungszylinder (6) erreicht. So kann die Steifigkeit der erfindungsgemäßen Schichtfeder über weite Strecken stufenlos und sehr variabel verändert werden.

In Ausführungsformen, die eine Schichtfeder mit mindestens zwei, beispielsweise zwei, drei, vier fünf, sechs oder sieben Elastomerschichten (3) umfassen, liegt im unbelasteten oder wenig belasteten Zustand der Schichtfeder zwischen zwei Wulsten (7) bzw. zwei entsprechenden Verlängerungen der Elastomerschichten, vorzugsweise ein Zwischenraum (8) vor, der so gewählt ist, dass er sich bei zunehmender Belastung verringert und bei Höchstbelastung, also größter Kompression der Feder völlig schließt, so dass bei höhere Belastung ein Wulst (7) entlang einer Elastomerschicht (3) unmittelbar an den Wulst (7') der benachbarten Elastomerschicht (3') anschließt. Im einfachsten Fall entspricht der Zwischenraum (8) im unbelasteten Zustand der Dicke der Zwischenplatte (2). Die Dicke des Wulstes (7) wird bestimmt durch die Dicke der Elastomerschicht (3) bzw. gegebenenfalls auch durch deren Überstand.

Das erfindungsgemäße typische Steifigkeits- bzw. Dämpfungsprofil der erfindungsgemäßen Schichtfeder kann somit dadurch erzielt und geregelt werden, dass die Wulste (7), die bei Kompression der Elastomerschichten (3) entstehen und den Querschnitt der Bohrung mit zunehmender Belastung verkleinern, durch kleine Zwischen- oder Hohlräume voneinander getrennt sind, die sich erst bei ansteigender Kompression bzw. Belastung schließen, wodurch im letzten Teil des Kompressionsweges eine sehr steiler und annähernd exponentieller Anstieg der Steifigkeit erzielt wird.

Durch die entsprechende Wahl von Dicke der Elastomerschichten (3), Dicke der Elastomerhülse (4), Dicke der Zwischenplatten (2) / Größe des Zwischenraumes (8) und Dicke der überstehenden Verlängerungen kann so zielgerichtet das gewünschte Steifigkeitsprofil (linear, progressiv, exponentiell) ausgesucht werden, welches die erfindungsgemäße Schichtfeder besitzen soll. So kann beispielsweise ein Steifigkeitsprofil mit langer linearer Zunahme der Steifigkeit und kurzer progressiver Zunahme der Steifigkeit und damit raschem Übergang in die exponentielle Zunahme der Steifigkeit erzielt werden, wenn die besagten Zwischenräume oder Dicken relativ groß sind. Die lineare Phase wird generell verkürzt, wenn die besagten Abstände oder Schichtdicken relativ gering sind.

Die erfindungsgemäßen bevorzugten Schichtfedern unterscheiden sich also zusammengefasst durch folgende Merkmale vom Stand der Technik: Im Zentrum der Schichten bzw. Platten ist eine Bohrung (6) angebracht, die mit einer Fütterung aus Elastomermaterial ausgestattet ist. Diese Fütterung besteht vorzugsweise aus einer geschlossenen Elastomerschicht bzw. einem hülsenförmigen Elastomerkörper (4) und ist nicht von den gegebenenfalls vorhandenen Zwischenplatten (2) unterbrochen. Vorzugsweise aber nicht notwendigerweise ist das Elastomerfufter der Bohrung fest mit den Seitenkanten bzw. Stirnflächen der Elastomerschichten (3) zwischen den Platten (1) und / oder (2) verbunden, z.B. durch Vulkanisierung oder Klebung.

Wird die erfindungsgemäße Schichtfeder nun axial d.h. in Richtung des Pfeils (5) belastet, so wird das Material der Schichten (3) nach außen und nach innen verdrängt. Durch die Verdrängung des Materials nach innen, d.h. in die Bohrung (6) hinein, entstehen Wulste (7), welche eine weitere Materialverschiebung aus der Elastomerschicht (3) zur Mitte hin, d.h. in Richtung der Bohrung (6), stark behindern. Sobald die Wulste auch die in den bevorzugten Ausführungsformen vorgesehenen Zwischenschlitze oder Zwischenräume (8) zwischen den einzelnen Wülsten verschließen, steigt die Progression weiter an. Durch die weitere Materialzunahme in der Bohrung bei weiterer Belastung verschließt sich die Bohrung zunehmend, so dass die zu dämpfende Vorrichtung im fester gehalten wird und nur noch geringfügige Schwingungen zulässt. Bei gänzlich geschlossener Bohrung steigt die Steifigkeit um ein vielfaches der ursprünglichen Steifigkeit exponentiell an.

Während sich in der linearen Phase sich die Steifigkeit bis auf etwa das 5-fache der Ausgangssteifigkeit erhöht, wird in der progressiven Phase eine Erhöhung der Steifigkeit auf etwa das 5 - 20-fache erreicht, In der exponentiellen Phase erhöht sich die Steifigkeit schnell über weit über das 20-fache hinaus.

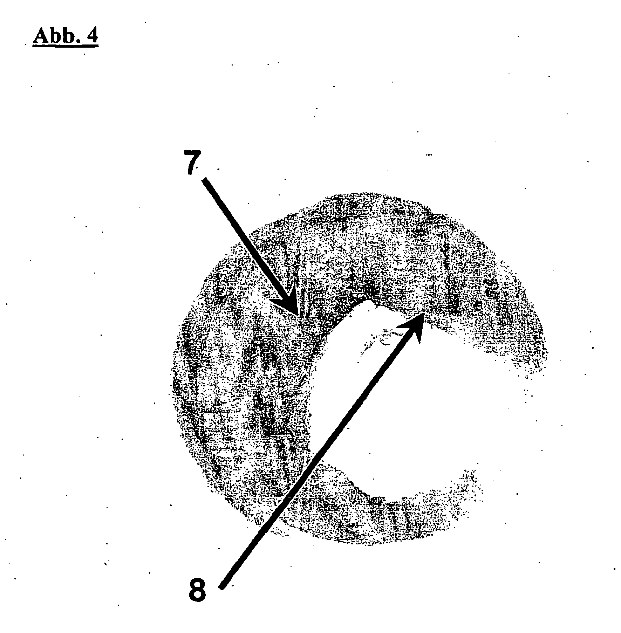

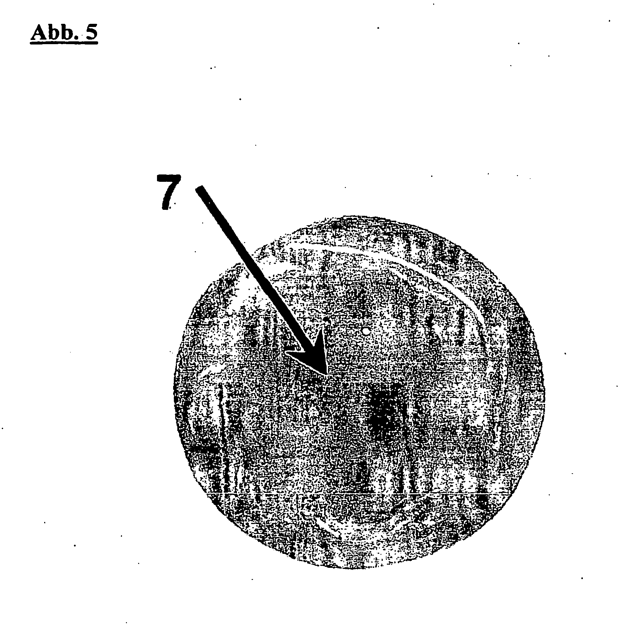

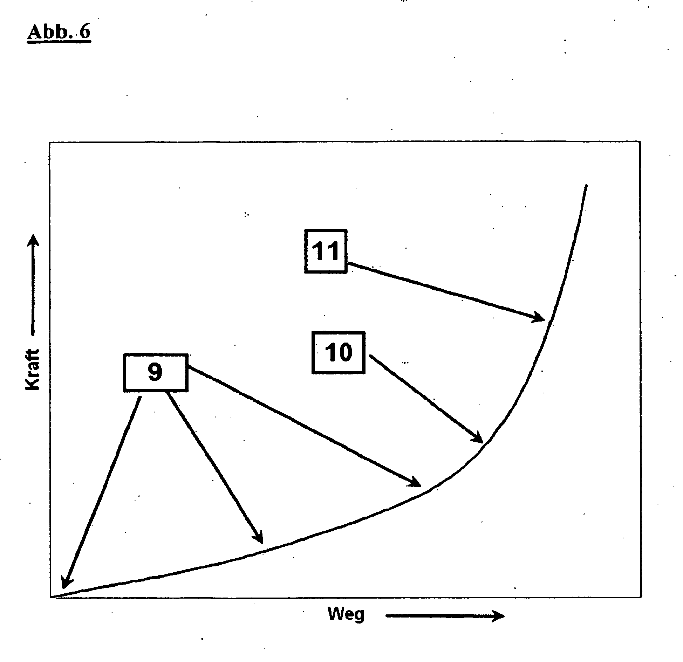

Abb. 4 und 5 geben den Bohrungsbereich im Inneren der Schichtfeder während des Druckvorganges wieder. In Abb. 4 sind die Wulste (7) noch deutlich kleiner. Teilweise sind noch die Lücken zwischen den Wulsten (8) erkennbar. Abb. 5 zeigt das gleiche Bauteil bei einer höheren Last. Bei dieser Last ist die Bohrung nahezu geschlossen, sodass die Steifigkeit etwa der 20-fachen Steifigkeit des ursprünglichen Wertes entspricht. Abb. 6 zeigt den Kraft- Weg- Kennlinien- Verlauf eines solchen Bauteiles mit dem über eine große Breite ausgeprägten linearer Steifigkeits- Verlauf (9). Nach einem kurzen linearen Verlauf der Steifigkeit folgt ein sanfter Übergang in einen progressiven Steifigkeitsverlauf (10), welcher im letzten Teil des Weges, den die unter Last stehende Feder zurücklegen kann, in einen kurzen aber sehr steilen annäherungsweise exponentieller Steifigkeits-Verlauf (11) übergeht.

In der Regel sind die erfindungsgemäßen Schichtfedern plan, d.h. die Schichtebenen stehen senkrecht zu Bohrung (6). Es sind aber auch erfindungsgemäße Schichtfedern aus entsprechenden konischen Elementen verwendbar. Hierbei nehmen die Platten und Schichten einen bestimmten von 90° abweichenden Winkel zur Mittelinie oder Achse der Bohrung an. Dieser Winkel liegt erfindungsgemäß zwischen 20° und 80°, vorzugsweise zwischen 40° und 60°. Mit derartigen konischen Elementen kann eine zusätzliche Regulierbarkeit der Steifigkeit erreicht werden.

Die Bauform der erfindungsgemäßen Schichtfeder kann üblicherweise rund aber auch anderweitig geformt sein. Beispielsweise kann Sie die Form eines Vier-, Fünf-Sechs- oder Vieleckes haben. Vorzugsweise sind die erfindungsgemäßen Schichtfedern rund oder oval.
Eine erfindungsgemäße Schichtfeder kann auch mehrere Bohrungen mit entsprechenden Elastomerschichten, bzw. -Futtern haben, die dann vorzugsweise symmetrisch über die Platten verteilt sind.

Die für die erfindungsgemäße Schichtfeder verwendeten Elastomere sind im Stand der Technik bekannt und in der einschlägigen Literatur hinreichend beschrieben. Vorzugsweise werden handelsübliche Naturkautschuke oder Kunststoffe eingesetzt. Beispiele für geeignete Elastomere sind: Naturkautschuk, Isopren-, Butadien-, Polynorbonen-, Chloropren-, Styrolbutadien-, Butyl-, Äthylenpropylen-, Nitril-, Polyurethan-, Acrylat-, Äthylenacrylat, Silicon- oder Fluor- Kautschuke bzw. Kunststoffe. Die für diese Erfindung verwendeten Elastomermaterialien bestehen vorzugsweise im wesentlichen aus einem Naturkautschuk, einem Naturkautschukderivat oder aus einem geeigneten elastischen polymeren Kunststoff oder Kunststoffgemisch. Die Elastomerschicht kann erfindungsgemäß unterschiedliche Härte ("Shore-Härte") und unterschiedliche Dämpfungseigenschaften aufweisen, entsprechend den gewünschten Anforderungen. Vorzugsweise werden Elastomere mit einer Härte von 20 bis 100 Shore, insbesondere 40 bis 80 Shore verwendet. Die Herstellung von Elastomeren unterschiedlicher Härte ist im Stand der Technik hinreichend beschrieben.

Der Elastomerkörper (4) besteht aus einem komprimierbaren Material, vorzugsweise einem Elastomermaterial wie beschrieben, welches vorzugsweise eine gleiche oder eine höhere Steifigkeit besitzt als das Elastomermaterial der Schichten (3).

Die für die erfindungsgemäßen Schichtfedern verwendeten End- und Zwischenplatten bestehen in der Regel aus hartem inflexiblen und bruchfestem Material, vorzugsweise sind dies Metalle, Legierungen, harte Kunststoffe, Karbonfasermaterialien und ähnliches.

Die erfindungsgemäßen Schichtfedern dienen zur Dämpfung von Schwingungen in Maschinen, insbesondere die in Lagern von Maschinen auftreten. Sie werden insbesondere dort eingesetzt, wo im normalen Lastbereich eine gute Körperschallisolation erfolgen soll, aber auch gleichzeitig höhere Lasten auftreten, bei denen die Wege relativ klein sein müssen. Das ist insbesondere bei Windkraftanlagen der Fall. So können die erfindungsgemäßen Schichtfedern für die Lagerung des Getriebeblockes, des Antriebes oder der Rotorachsen von Windkraftanlagen eingesetzt werden.

Zusammenfassend betrifft die Erfindung folgende Gegenstände:
- Eine Schichtfeder, welche ein belastungsabhängiges Steifigkeitsprofil mit Phasen linear zunehmender Steifigkeit, progressiv ansteigender Steifigkeit und exponentiell wachsender Steifigkeit aufweist, bestehend im wesentlichen aus mindestens einer Elastomerschicht (3), welche zwischen einer oberen und einer unteren unelastischen Endplatte (1) angeordnet ist, wobei die Platten und die mindestens eine Elastomerschicht eine axiale Bohrung (6) zur Aufnahme des zu dämpfenden Bauteils aufweisen, und in dieser Bohrung ein Elastomerkörper (4) in Form einer Hülse oder einer oder mehrerer ringförmiger Scheiben angeordnet ist, welcher bei Krafteinwirkung auf die Elastomerschicht (3) des Federelements in axiale Richtung (5) einen ringförmigen Wulst (7) im Bereich der Stirnfläche der Elastomerschicht (3) an der Innenwand der Bohrung (6) erzeugt, der durch Verkleinerung des Querschnitts der Bohrung mit zunehmender Belastung die Steifigkeit der Schichtfeder erhöht.
- Eine betreffende Schichtfeder, bei welcher der besagte Elastomerkörper (4) eine Hülse ist, welche im wesentlichen passgenau an der Innenwand der Bohrung (6) anliegt und das zu dämpfende Bauteil umschließt.
- Eine betreffende Schichtfeder, bei welcher der besagte Elastomerkörper (4) durch eine Verlängerung der jeweiligen Elastomerschicht (3), welche in die Bohrung (6) hineinragt, gebildet wird.
- Eine betreffende Schichtfeder, die einen weiteren Elastomerkörper (4) in Form einer Hülse aufweist, der zwischen Innenwand der Bohrung (6) und den Verlängerungen der Elastomerschicht (3) angeordnet ist.
- Eine betreffende Schichtfeder, welche mindestens eine Zwischenplatte (2) aufweist, die parallel zu den Endplatten (1) angeordnet und mit einer oberen und einer unteren parallel angeordneten Elastomerschicht (3) verbunden ist, so dass bei Belastung der Feder in axialer Richtung (5) mindestens zwei ringförmige Wulste (7) im Bereich der Stirnflächen der Elastomerschichten (3) im Inneren der Bohrung (6) entstehen.
- Eine betreffende Schichtfeder, die eine Zwischenplatte (2) und zwei Elastomerschichten (3) aufweist, so dass bei Belastung der Feder in axialer Richtung (5) zwei ringförmige Wulste (7) entlang der Seitenkanten der Elastomerschichten (3) gebildet werden.
- Eine entsprechende Schichtfeder, welche zwei entsprechend angeordnete Zwischenplatte (2) und drei Elastomerschichten (3) aufweist, wobei bei Belastung der Feder in axialer Richtung (5) drei ringförmige Wulste (7) entlang der Seitenkanten der Elastomerschichten (3) entstehen.
- Eine entsprechende Schichtfeder, welche drei, vier, fünf, sechs, sieben, acht oder neun Zwischenplatten (2) und somit vier, fünf, sechs, sieben, acht, neun oder zehn Elastomerschichten (3) umfasst, so dass bei Belastung der Feder in axialer Richtung (5) entsprechend viele ringförmige Wulste (7) entlang der Elastomerschichten (3) entstehen.
- Eine entsprechende Schichtfeder, bei welcher zwischen jeweils zwei benachbarten Wulsten (7) ein Zwischenraum (8) vorliegt, der sich bei zunehmender Kompression der Elastormerschichten (3) zunehmend schließt.
- Eine entsprechende Schichtfeder, bei welcher besagter Zwischenraum (8) zwischen den Wulsten im unbelasteten Zustand der Dicke der zwischen den betreffenden benachbarten Elastomerschichten (3) angeordneten Zwischenplatte (2) entspricht.
- Eine entsprechende Schichtfeder, die in Form eines konischen Elementes bzw. Bauteils vorliegt, bei dem die parallel angeordneten elastomeren Schichten (3) und Platten (1), (2) einen von 90° abweichenden Winkel zur Ausrichtung der Bohrung (6) aufweisen.
- Eine Verwendung besagter Schichtfeder zur Dämpfung von Schwingungen in Maschinen, insbesondere zur Körperschallentkopplung in Windkraftanlagen.

Beschreibung der Bezugszeichen im Text und in den Abbildungen:

| **Position** | **Bezeichnung** |
|---|---|
| 1 | Endplatte |
| 2 | Zwischenplatte |
| 3, 3' | Elastomerschicht |
| 4 | Elastomerkörper, welcher die Bohrung umschließt und eine Trennung zwischen Bohrung und Zwischenplatte darstellt |
| 5 | Belastungsrichtung |
| 6 | Bohrung |
| 7, 7' | Wulst |
| 8 | Hohlraum / Zwischenraum zwischen Wülsten |
| 9 | linearer Steifigkeits-Verlauf |
| 10 | progressiven Steifigkeits-Verlauf |
| 11 | exponentieller Steifigkeits-Verlauf |

### Beschreibung der Abbildungen:

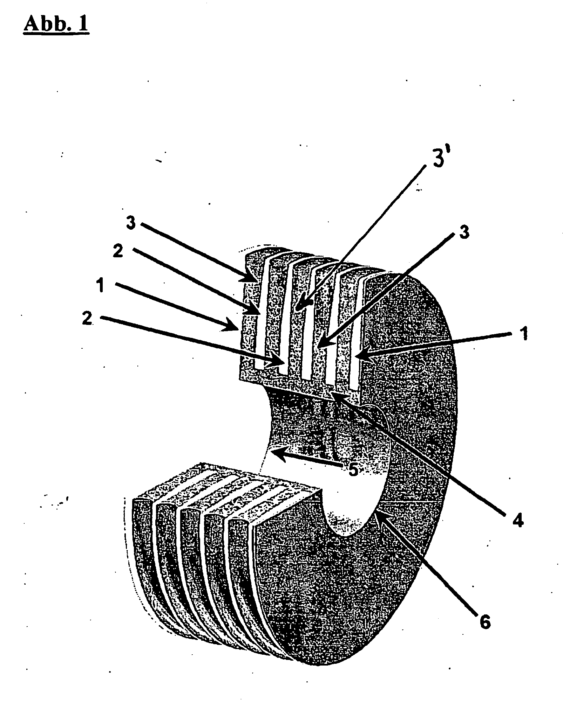

Abb. 1 - Zeichnung des unbelasteten Bauteiles

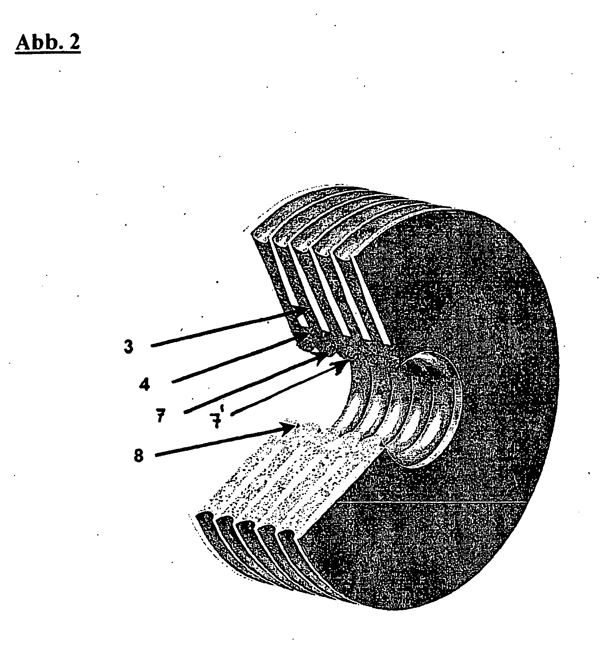

Abb. 2 - Zeichnung des gering belasteten Bauteiles

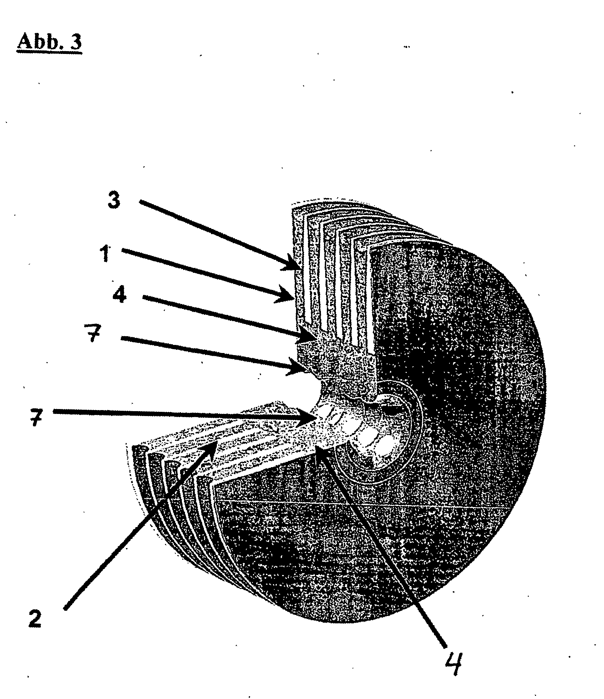

Abb. 3 - Zeichnung des mittelstark belasteten Bauteils
Abb. 4 - Fotografie der Bohrung des leicht belasteten Bauteils
Abb. 5 - Fotografie der Bohrung des stark belasteten Bauteils
Abb. 6 - Kraft- Weg- Kennlinien- Verlauf

## Patentansprüche

1. Schichtfeder, welche ein belastungsabhängiges Steifigkeitsprofil mit Phasen linear zunehmender Steifigkeit, progressiv ansteigender Steifigkeit und exponentiell wachsender Steifigkeit aufweist, bestehend im wesentlichen aus mindestens einer Elastomerschicht (3), welche zwischen einer oberen und einer unteren unelastischen Endplatte (1) angeordnet ist, wobei die Platten und die mindestens eine Elastomerschicht eine axiale Bohrung (6) zur Aufnahme des zu dämpfenden Bauteils aufweisen, **dadurch gekennzeichnet, dass** in dieser Bohrung ein Elastomerkörper (4) in Form einer Hülse oder einer oder mehrerer ringförmiger Scheiben angeordnet ist, welcher bei Krafteinwirkung auf die Elastomerschicht (3) des Federelements in axiale Richtung (5) einen ringförmigen Wulst (7) im Bereich der Stirnfläche der Elastomerschicht (3) an der Innenwand der Bohrung (6) erzeugt, der durch Verkleinerung des Querschnitts der Bohrung mit zunehmender Belastung die Steifigkeit der Schichtfeder erhöht.

2. Schichtfeder nach Anspruch 1, **dadurch gekennzeichnet, dass** der Elastomerkörper (4) eine Hülse ist, welche im wesentlichen passgenau an der Innenwand der Bohrung (6) anliegt und das zu dämpfende Bauteil umschließt.

3. Schichtfeder nach Anspruch 1, **dadurch gekennzeichnet, dass** der Elastomerkörper (4) durch eine Verlängerung der jeweiligen Elastomerschicht (3) in die Bohrung (6) hinein gebildet wird.

4. Schichtfeder nach Anspruch 3, **dadurch gekennzeichnet, dass** sie einen weiteren Elastomerkörper (4) in Form einer Hülse aufweist, der zwischen Innenwand der Bohrung (6) und den Verlängerungen der Elastomerschicht (3) angeordnet ist.

5. Schichtfeder nach einem der Ansprüche 1-4, **dadurch gekennzeichnet, dass** sie mindestens eine Zwischenplatte (2) aufweist, die parallel zu den Endplatten (1) angeordnet und mit einer oberen und einer unteren parallel angeordneten Elastomerschicht (3) verbunden ist, so dass bei Belastung der Feder in axialer Richtung (5) mindestens zwei ringförmige Wulste (7) im Bereich der Stirnflächen der Elastomerschichten (3) im Inneren der Bohrung (6) entstehen.

6. Schichtfeder nach Anspruch 5, **dadurch gekennzeichnet, dass** sie eine Zwischenplatte (2) und zwei Elastomerschichten (3) aufweist, so dass bei Belastung der Feder in axialer Richtung (5) zwei ringförmige Wulste (7) entlang der Seitenkanten der Elastomerschichten (3) gebildet werden.

7. Schichtfeder nach Anspruch 5, **dadurch gekennzeichnet, dass** sie zwei entsprechend angeordnete Zwischenplatten (2) und drei Elastomerschichten (3) aufweiset, wobei bei Belastung der Feder in axialer Richtung (5) drei ringförmige Wulste (7) entlang der Seitenkanten der Elastomerschichten (3) entstehen.

8. Schichtfeder nach Anspruch 5, **dadurch gekennzeichnet, dass** sie drei, vier; fünf, sechs, sieben, acht oder neun Zwischenplatten (2) und somit vier, fünf, sechs, sieben, acht, neun oder zehn Elastomerschichten (3) umfasst, so dass bei Belastung der Feder in axialer Richtung (5) entsprechend viele ringförmige Wulste (7) entlang der Elastomerschichten (3) entstehen.

9. Schichtfeder nach einem der Ansprüche 1-8, **dadurch gekennzeichnet, dass** zwischen jeweils zwei benachbarten Wulsten (7) ein Zwischenraum (8) vorliegt, der sich bei zunehmender Kompression der Elastormerschichten (3) zunehmend schließt.

10. Schichtfeder nach Anspruch 9, **dadurch gekennzeichnet, dass** der Zwischenraum (8) zwischen den Wulsten im unbelasteten Zustand der Dicke der zwischen den betreffenden benachbarten Elastomerschichten (3) angeordneten Zwischenplatte (2) entspricht.

11. Schichtfeder nach einem der Ansprüche 1-10, **dadurch gekennzeichnet, dass** sie in Form eines konischen Elementes vorliegt, bei dem die parallel angeordneten elastomeren Schichten (3) und Platten (1), (2) einen von 90° abweichenden Winkel zur Ausrichtung der Bohrung (6) aufweisen.

12. Verwendung einer Schichtfeder gemäß der Ansprüche 1-11 zur Dämpfung von Schwingungen in Maschinen.

13. Verwendung nach Anspruch 12 zur Körperschallentkopplung in Windkraftanlagen.

## Claims

1. Layer spring which has a load-dependent stiffness profile with phases of linearly increasing stiffness, progressively increasing stiffness and exponentially growing stiffness, essentially consisting of at least one elastomer layer (3) which is arranged between an upper and a lower inelastic end plate (1), where the plates and the at least one elastomer layer have an axial hole (6) for the accommodation of the component to be damped, **characterized in that** an elastomer body (4) in the form of a bush or one or more annular discs is arranged in this hole and, when a force acts on the elastomer layer (3) of the spring element in the axial direction (5), produces an annular bead (7) in the region of the front face of the elastomer layer (3) on the inside wall of the hole (6), which increases the stiffness of the layer spring with increasing load by reducing the cross section of the hole.

2. Layer spring according to Claim 1, **characterized in that** the elastomer body (4) is a bush which lies against the inside wall of the hole (6) with an essentially precise fit and surrounds the component to be damped.

3. Layer spring according to Claim 1, **characterized in that** the elastomer body (4) is formed by an extension of the respective elastomer layer (3) into the hole (6).

4. Layer spring according to Claim 3, **characterized in that** it has a further elastomer body (4) in the form of a bush which is arranged between the inside wall of the hole (6) and the extensions of the elastomer layer (3).

5. Layer spring according to one of Claims 1-4, **characterized in that** it has at least one intermediate plate (2) which is arranged parallel to the end plates (1) and is connected to an upper and a lower elastomer layer (3) arranged in parallel, so that, when the spring is loaded in the axial direction (5), at least two annular beads (7) form in the region of the front faces of the elastomer layers (3) in the interior of the hole (6).

6. Layer spring according to Claim 5, **characterized in that** it has an intermediate plate (2) and two elastomer layers (3), so that, when the spring is loaded in the axial direction (5), two annular beads (7) are formed along the side edges of the elastomer layers (3).

7. Layer spring according to Claim 5, **characterized in that** it has two correspondingly arranged intermediate plates (2) and three elastomer layers (3), where, when the spring is loaded in the axial direction (5), three annular beads (7) form along the side edges of the elastomer layers (3).

8. Layer spring according to Claim 5, **characterized in that** it comprises three, four, five, six, seven, eight or nine intermediate plates (2) and thus four, five, six, seven, eight, nine or ten elastomer layers (3), so that, when the spring is loaded in the axial direction (5), a corresponding number of annular beads (7) form along the elastomer layers (3).

9. Layer spring according to one of Claims 1-8, **characterized in that** an interspace (8) is present between each two adjacent beads (7) and increasingly closes on increasing compression of the elastomer layers (3).

10. Layer spring according to Claim 9, **characterized in that** the interspace (8) between the beads corresponds in the unloaded state to the thickness of the intermediate plate (2) arranged between the relevant adjacent elastomer layers (3).

11. Layer spring according to one of Claims 1-10, **characterized in that** it is in the form of a conical element, in which the elastomeric layers (3) and plates (1), (2) arranged in parallel adopt an angle deviating by 90° from the alignment of the hole (6).

12. Use of a layer spring according to Claims 1-11 for damping vibrations in machines.

13. Use according to Claim 12 for decoupling solid-borne sound in wind turbines.

## Revendications

1. Ressort en couche qui a un profile de raideur dépendant de la charge avec des phases de raideur augmentant linéairement, de raideur augmentant progressivement et de raideur croissant exponentiellement, constitué essentiellement d'au moins une couche en élastomère (3) qui est agencée entre une plaque d'extrémité inélastique supérieure et une plaque d'extrémité inélastique inférieure (1), dans lequel les plaques et l'au moins une couche en élastomère ont un trou axial (6) pour la réception du composant à amortir, **caractérisé en ce qu'**un corps en élastomère (4) sous la forme d'une douille ou d'un ou plusieurs disques annulaires est agencé dans ce trou et, lorsqu'une force agit sur la couche en élastomère (3) de l'élément de ressort dans la direction axiale (5), produit une perle annulaire (7) dans la région de la face avant de la couche en élastomère (3) sur la paroi intérieure du trou (6), laquelle augmente la raideur du ressort en couche avec l'augmentation de la charge en réduisant la section transversale du trou.

2. Ressort en couche selon la revendication 1, **caractérisé en ce que** le corps en élastomère (4) est une douille qui s'étend contre la paroi intérieure du trou (6) avec un ajustage essentiellement précis et qui entoure le composant à amortir.

3. Ressort en couche selon la revendication 1, **caractérisé en ce que** le corps en élastomère (4) est formé par une extension de la couche en élastomère respective (3) dans le trou (6).

4. Ressort en couche selon la revendication 3, **caractérisé en ce qu'**il comprend un corps en élastomère supplémentaire (4) sous la forme d'une douille, qui est agencé entre la paroi intérieure du trou (6) et les extensions de la couche en élastomère(3).

5. Ressort en couche selon l'une des revendications 1-4, **caractérisé en ce qu'**il comprend au moins une plaque intermédiaire (2) qui est agencée parallèlement aux plaques d'extrémité (1) et qui est connectée à une couche en élastomère supérieure et une couche en élastomère inférieure (3) agencées en parallèle, de telle sorte que, lorsque le ressort est chargé dans la direction axiale (5), au moins deux perles annulaires (7) se forment dans la région des faces avant des couches en élastomère (3) dans l'intérieur du trou (6).

6. Ressort en couche selon la revendication 5, **caractérisé en ce qu'**il comprend une plaque intermédiaire (2) et deux couches en élastomère (3), de telle sorte que, lorsque le ressort est chargé dans la direction axiale (5), deux perles annulaires (7) sont formées le long des bords latéraux des couches en élastomère (3).

7. Ressort en couche selon la revendication 5, **caractérisé en ce qu'**il comprend deux plaques intermédiaires agencées en correspondance (2) et trois couches en élastomère (3), de telle sorte que, lorsque le ressort est chargé dans la direction axiale (5), trois perles annulaires (7) se forment le long des bords latéraux des couches en élastomère (3).

8. Ressort en couche selon la revendication 5, **caractérisé en ce qu'**il comprend trois, quatre, cinq, six, sept, huit ou neuf plaques intermédiaires (2) et ainsi quatre, cinq, six, sept, huit, neuf ou dix couches en élastomère (3), de telle sorte que, lorsque le ressort est chargé dans la direction axiale (5), un nombre correspondant de perles annulaires (7) se forment le long des couches en élastomère (3).

9. Ressort en couche selon l'une des revendications 1-8, **caractérisé en ce qu'**un espace (8) est présent entre chaque deux perles adjacentes (7) et se ferme de façon croissante lors d'une compression croissante des couches en élastomère (3).

10. Ressort en couche selon la revendication 9, **caractérisé en ce que** l'espace (8) entre les perles correspond dans l'état déchargé à l'épaisseur de la plaque intermédiaire (2) agencée entre les couches en élastomère adjacentes concernées (3).

11. Ressort en couche selon l'une des revendications 1-10, **caractérisé en ce qu'**il est sous la forme d'un élément conique, dans lequel les couches en élastomère (3) et les plaques (1), (2) agencées en parallèle sont selon un angle déviant de 90° par rapport à l'alignement du trou (6).

12. Utilisation d'un ressort en couche selon les revendications 1-11 pour amortir des vibrations dans des machines.

13. Utilisation selon la revendication 12 pour découpler un son généré dans un solide dans des éoliennes.
